# EUROPEAN PATENT SPECIFICATION

(11) **EP 3 824 729 B1**
(45) Date of publication and mention of the grant of the patent: **29.05.2024**
(21) Application number: 19214161.2
(22) Date of filing: 06.12.2019
(51) Int. Cl.: A01K 75/06, D07B 5/00, D04C 1/12

(54) **BRAIDED GRAVITY CORD WITH SPOT WEIGHTS**
GEFLOCHTENES SCHWERES SEIL MIT PUNKTGEWICHTEN
CORDE DE GRAVITÉ TRESSÉE DOTÉE DE POIDS DE REPÉRAGE

(30) Priority: 19.11.2019 EE 201900064 U
(43) Date of publication of application: 26.05.2021
(73) Proprietor: Ige, Kalvar, 94535 Körkvere küla (EE)
(72) Inventor: Ige, Kalvar, 94535 Körkvere küla (EE)
(74) Representative: AAA Patendibüroo OÜ

(56) References cited:
- CN-U- 206 565 123
- CN-U- 208 572 931
- CN-Y- 2 887 061
- JP-U- S52 122 284
- KR-A- 20160 096 051
- KR-U- 19980 058 422

## Description

### TECHNICAL FIELD

This invention belongs to the field of fishing and fish farming and relates to a braided gravity cord with spot weights for fishing nets and for fish farm cages. The gravity cord is sometimes also referred to as a sinking line.

### BACKGROUND ART

Well-known background art includes gravity cords with textile covers knitted or crocheted around a leaden gravity chain, which is of a uniform weight in the entire extent of the gravity cord. Gravity cords with a PVC cover formed around a laden gravity chain with the help of an extruder, which are of a uniform weight in the extent of the entire length, are also known.

Formerly (approx. up to 1970), individual weights tied to the bottom cord or the gravity cord (sinking line) of the net, such as stones, hoops, sand bags, etc., were used. Using stones, hoops, sand bags, etc. is unfeasible today due to the extensive manual work involved.

In many of the previously developed solutions, braided gravity cords have contained lead, for example in the form of a lead wire or lead chain, which is braided into the gravity cord; however, it is not recommended to use lead in the modern day due to environmental concerns. Iron wire has also been used in some solutions but it is corrosive and relatively rigid.

Japanese patent JP4476571 B2 introduces a variable weight braided gravity cord with increasing weight. In this case, the gravity elements braided in the gravity cord are made of lead.

Chinese document CN2887061Y discloses plastic spot weights braided into the gravity cord. The spot weights are made of plastic having density of 3-4.5 g/cm³ and said spot weights are made by the mixing, granulation and pressure casting molding of the HPDE, EVA and inorganic fillers.

Chinese utility model CN208572931U discloses a braided gravity cord with spot weights, where at predetermined intervals gravity elements have been braided into the gravity cord. Said gravity elements are made of a plastic material of a higher specific gravity than that of water. Said element has along its entire length a circular cross-section and said element has end sections with rounded tips, wherein at least part of the surface of the gravity element is covered with protruding studs.

### SUMMARY OF INVENTION

The present invention provides a braided gravity cord with spot weights, where at predetermined intervals gravity elements have been braided into the gravity cord according to claim 1.

The gravity elements are made of a plastic material of a higher specific gravity than that of water and said element has along its entire length a circular cross-section and said element has end sections with rounded tips, wherein at least part of the surface of the gravity element is covered with protruding studs.

In the first preferred embodiment of the invention, the gravity element comprises a cylindrical middle section, having at both ends an end section with tapering cross-section and with rounded tip.

The gravity elements may have a circular cross-section and more or less oval longitudinal section profile.

In another preferred embodiment of the invention, the gravity element includes a cylindrical middle section, the end sections of which form the rounded ends of the gravity element. In this embodiment, the studs are preferably located on the cylindrical part of the gravity element.

The studs are intended to prevent shifting of the gravity element in the braided cord.

The studs also are necessary for braiding the gravity element into the gravity cord, as they help in the braiding machine to keep the gravity element in place with respect to the section of the cord into which the gravity element is being braided. Gravity elements are braided into the gravity cord at intervals, which means that between two consecutive gravity elements there is a section of cord without a gravity element.

The number of gravity elements (i.e. spot weights) and the spacing between said elements in the gravity cord and the use of materials with different specific gravities enable to vary the force applied by the gravity cord to the fishing net, which is used for pulling said net towards the bottom of the waterbody.

In other words, using gravity elements of different weights and of different plastic materials and adjusting the spacing between the elements gives to the gravity cord the necessary weight per the length of the gravity cord, which is required for pulling different nets to the bottom of waterbodies.

The gravity element is made of a plastic material comprising a mineral filler.

The gravity element is preferably made by plastic extrusion of polypropylene comprising a filler or a plastic material comprising a filler.

Preferably, the gravity element is mainly made of polypropylene comprising barium sulphate as a filler.

Polypropylene comprising barium sulphate is available as a ready-made mixture. However, other fillers may also be used.

Adding and selecting fillers enables achieving the desired specific gravity of the gravity element produced. The specific gravity in this context means the relative density of the material with respect to water. In a preferred embodiment, the specific gravity of the gravity element is 1.8 to 2.5, preferably approximately 2.2 (2.2 g/cm³). Using other fillers enables to achieve a specific gravity value up to 7. By changing the specific gravity of material, i.e. by choosing a suitable filler and the concentration thereof in polypropylene, it is possible to use the same mould for manufacturing gravity elements of the same external size and shape but of different special gravities.

Braiding of floats of similar shapes with the gravity elements into the cords is a technology which has been known from background art for decades, thus, it is not described in further detail in this specification, as it is well-known for the person skilled in the art.

One of the significant advantages of the invention is a use of a more readily recyclable plastic instead of lead, which is hazardous to the environment.

Using gravity cord according to the present invention on fishing nets ensures better catching performance of the nets.

When using a gravity cord according to the present invention, the fishing net will not come in contact with the bottom of the waterbody and will gather less mud and aquatic plants than a regular gravity cord.

### BRIEF DESCRIPTION OF DRAWINGS

The invention is described in the following with references to the exemplary embodiments illustrated on the accompanying schematic drawings, in which:
Figure 1 is a side view of the section of the gravity cord comprising the gravity element;
Figure 2 is a partial sectional view of the gravity cord according to Figure 1 to show the gravity element according to first embodiment of the invention braided into the cord;
Figure 3 is a spatial view of the gravity element according to the first embodiment of the invention;
Figures 4 and 5 are side and end views of the gravity element of Figure 3, respectively; and
Figure 6 is a side view of an another embodiment of the gravity element according to the invention.

### DESCRIPTION OF EMBODIMENTS

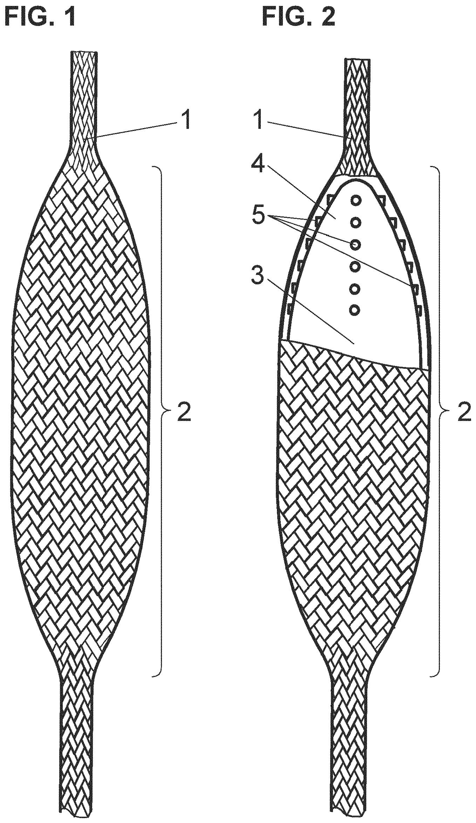

Figure 1 shows the gravity cord 1 section 2 comprising the gravity element or in other words the spot weight. The gravity element 3 in the braiding of the gravity cord 1 can be seen in the sectional view on Figure 2.

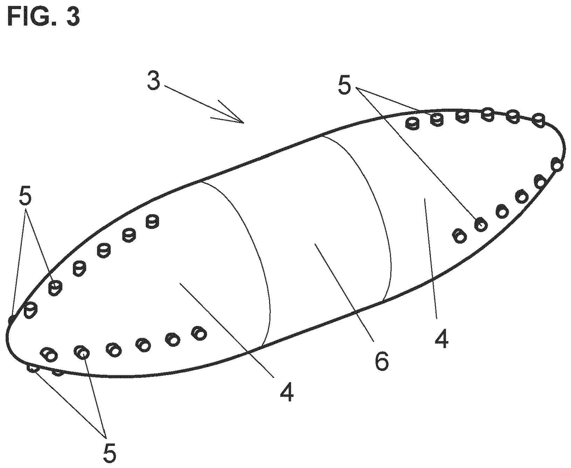

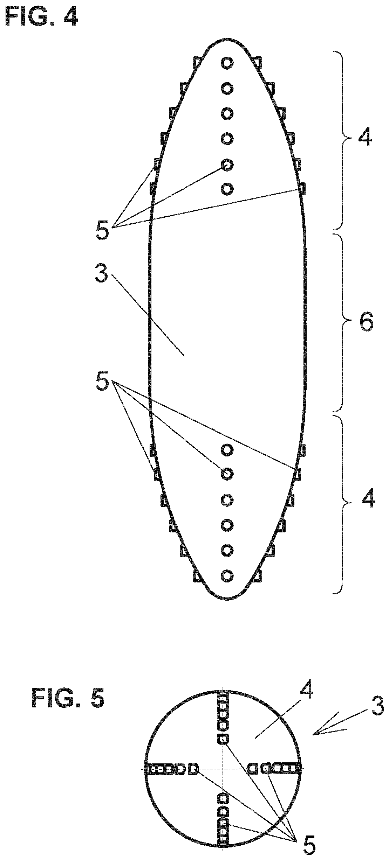

Spatial views of the gravity element 3 are provided on Figure 3 and side and end views on Figure 4 and 5, respectively. The gravity element depicted on these drawings comprises tapering end sections 4 and between said end sections a cylindrical section 6.

Both end sections 4 have studs 5 in four groups in the depicted embodiment. In this embodiment, the groups of studs 5 are placed as groups with 90-degree spaces in-between on the end view. The studs 5 are intended to prevent shifting of the gravity element 3 in the braided cord.

When the gravity cord 1 is under tension, the braiding around the gravity element 3 is pulled tightly against the gravity element 3 and the studs 5 on the end sections 4 thereof.

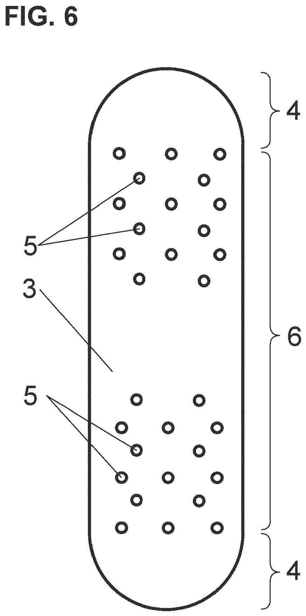

Figure 6 depicts a gravity element 3 of an another embodiment according to the invention. In this embodiment, the gravity element 3 comprises a cylindrical section 6, the end sections 4 in the ends thereof are designed as rounded ends of the cylindrical section 6.

The gravity element 3 is made of plastic by extrusion. In the embodiment of the invention, when the gravity element is made of polypropylene comprising barium sulphate, the specific gravity of the gravity element is higher than that of water, e.g. close to 2.2.

The gravity element is preferably made of polypropylene which is mixed with a suitable filler or of another plastic material which comprises a suitable filler to achieve a specific gravity higher than that of water.

For example, the gravity element is made of polypropylene which mainly comprises barium sulphate as the filler. One example of this polypropylene is homopolymer polypropylene with the barium sulphate concentration of 70% - this material is commercially available as Scolefin^{®} 47 B 10.

The gravity elements are made of materials (plastic) of different specific gravities by using the extrusion technology. Also the gravity elements are manufactured of different weights and sizes.

The weight of a suitable gravity cord is calculated based on the parameters of the net used and the required length thereof and the weight of a suitable gravity element is used to find the number of and a spacing between the gravity elements, which will ensure that applying (attaching) the cord to a fishing net will keep the net on the bottom of the waterbody.

Gravity elements are braided into the gravity cord using a special machine which braids said gravity elements at predetermined intervals between the technical fibres of the gravity cord.

In the braiding process, the studs help to braid the gravity element into the cord, as the surface of the plastic material which the gravity elements are made of is relatively slippery, the studs are caught in the above-mentioned technical fibres in the course of braiding and help to keep the gravity element in its place and to move along with the cord.

When using the gravity cord, the studs on the surface of the gravity elements prevent the shifting of the gravity elements in the braided cord and the stretching of the braided cord on the surface of the gravity elements.

It is obvious to a person skilled in the art that the invention is not limited to embodiments depicted in the drawings nor to the embodiments described above, but other embodiments of the invention are possible within the scope of the enclosed claims.

## Claims

1. A braided gravity cord (1) with spot weights, wherein at predetermined intervals gravity elements (3) have been braided into the gravity cord (1), wherein said gravity element (3) is made of a plastic material of a higher specific gravity than that of water and said element (3) has along its entire length a circular cross-section and said element (3) has end sections (4) with rounded tips, wherein at least part of the surface of the gravity element (3) is covered with protruding studs (5), the protruding studs (5) are located on the end sections (4), **characterized in that** the studs (5) are placed on the end sections of the gravity element (3) in groups where the groups are located symmetrically on the end section (4) of the gravity element (3) with respect to the longitudinal axis of the gravity element (3).

2. The gravity cord (1) according to claim 1 **characterized in that** the gravity element (3) comprises a cylindrical middle section (6), having at both ends an end section (4) with tapering cross-section and rounded tip.

3. The gravity cord (1) according to claim 1 **characterized in that** the gravity element (3) has a cylindrical middle section (6) the end sections (4) of which form the rounded ends of the gravity element (3).

4. The gravity cord (1) according to any preceding claim **characterized in that** the gravity element (3) is made of a plastic material comprising a mineral filler.

5. The gravity cord (1) according to any preceding claim 1 to 3 **characterized in that** the gravity element (3) is made of polypropylene comprising barium sulphate as the filler.

## Patentansprüche

1. Geflochtenes Schwerkraftseil (1) mit Punktgewichten, wobei in vorbestimmten Intervallen Schwerkraftelemente (3) in das Schwerkraftseil (1) geflochten wurden, wobei das Schwerkraftelement (3) aus einem Kunststoffmaterial mit einem höheren spezifischen Gewicht als jenes von Wasser gefertigt ist, und das Element (3) entlang seiner gesamten Länge einen kreisförmigen Querschnitt aufweist, und das Element (3) Endabschnitte (4) mit abgerundeten Spitzen aufweist, wobei mindestens ein Teil der Oberfläche des Schwerkraftelements (3) mit vorspringenden Noppen (5) bedeckt ist, wobei sich die vorspringenden Noppen (5) an den Endabschnitten (4) befinden, **dadurch gekennzeichnet, dass** die Noppen (5) an den Endabschnitten des Schwerkraftelements (3) in Gruppen platziert sind, wobei sich die Gruppen in Bezug auf die Längsachse des Schwerkraftelements (3) symmetrisch am Endabschnitt (4) des Schwerkraftelements (3) befinden.

2. Schwerkraftseil (1) nach Anspruch 1, **dadurch gekennzeichnet, dass** das Schwerkraftelement (3) einen zylindrischen Mittelabschnitt (6) umfasst, der an beiden Enden einen Endabschnitt (4) mit verjüngtem Querschnitt und abgerundeter Spitze aufweist.

3. Schwerkraftseil (1) nach Anspruch 1, **dadurch gekennzeichnet, dass** das Schwerkraftelement (3) einen zylindrischen Mittelabschnitt (6) aufweist, dessen Endabschnitte (4) die abgerundeten Enden des Schwerkraftelements (3) bilden.

4. Schwerkraftseil (1) nach einem vorstehenden Anspruch, **dadurch gekennzeichnet, dass** das Schwerkraftelement (3) aus einem Kunststoffmaterial gefertigt ist, das einen mineralischen Füllstoff umfasst.

5. Schwerkraftseil (1) nach einem vorstehenden Anspruch 1 bis 3, **dadurch gekennzeichnet, dass** das Schwerkraftelement (3) aus Polypropylen gefertigt ist, das Bariumsulfat als Füllstoff umfasst.

## Revendications

1. Fil tressé plongeant (1) muni de poids localisés, dans lequel, à intervalles prédéterminés, des éléments plongeants (3) ont été tressés dans le fil plongeant (1), dans lequel ledit élément plongeant (3) est composé d'une matière plastique d'une densité spécifique plus élevée que celle de l'eau et ledit élément (3) présente sur toute sa longueur une section transversale circulaire et ledit élément (3) présente des sections d'extrémité (4) munies de bouts arrondis, dans lequel au moins une partie de la surface de l'élément plongeant (3) est recouverte d'ergots saillants (5), les ergots saillants (5) sont situés sur les sections d'extrémité (4), **caractérisé en ce que** les ergots (5) sont placés sur les sections d'extrémité de l'élément plongeant (3) en groupes, les groupes étant situés symétriquement sur la section d'extrémité (4) de l'élément plongeant (3) par rapport à l'axe longitudinal de l'élément plongeant (3).

2. Fil plongeant (1) selon la revendication 1 **caractérisé en ce que** l'élément plongeant (3) comprend une section médiane cylindrique (6), présentent aux deux extrémités une section d'extrémité (4) à section transversale effilée et à bout arrondi.

3. Fil plongeant (1) selon la revendication 1 **caractérisé en ce que** l'élément plongeant (3) présente une section médiane cylindrique (6) dont les sections d'extrémité (4) forment les extrémités arrondies de l'élément plongeant (3).

4. Fil plongeant (1) selon une quelconque revendication précédente **caractérisé en ce que** l'élément plongeant (3) est composé d'une matière plastique comprenant une charge minérale.

5. Fil plongeant (1) selon une quelconque revendication 1 à 3 précédente **caractérisé en ce que** l'élément plongeant (3) est composé de polypropylène comprenant du sulfate de baryum en tant que charge.
